Europäisches Patentamt

(19) European Patent Office

Office européen des brevets

(11) Publication number: **0 073 759**
**B1**

(12) **EUROPEAN PATENT SPECIFICATION**

(45) Date of publication of patent specification:
06.08.86

(51) Int. Cl.⁴: **B 62 D 55/28**

(21) Application number: **81901740.1**

(22) Date of filing: **04.03.81**

(86) International application number:
**PCT/US81/00274**

(87) International publication number:
**WO 82/03050 16.09.82 Gazette 82/22**

(54) **ROADABLE GROUSER FOR TRACK SHOES.**

(43) Date of publication of application:
16.03.83 Bulletin 83/11

(45) Publication of the grant of the patent:
06.08.86 Bulletin 86/32

(84) Designated Contracting States:
DE FR GB

(56) References cited:
DE-C- 739 577
FR-A-1 341 940
GB-A-1 041 991
US-A-1 635 596
US-A-2 345 763
US-A-2 731 304
US-A-3 058 783
US-A-3 261 646
US-A-3 475 060
US-A-3 666 327
US-A-4 185 877

(73) Proprietor: **CATERPILLAR TRACTOR CO.**
**100 Northeast Adams Street**
**Peoria Illinois 61629 (US)**

(72) Inventor: **KORTERING, Randail L.**
**5816 North Mackinac Drive**
**Peoria, IL 61614 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

This invention relates generally to replaceable roadable grousers for track shoes.

Roadable track shoe grousers are used on track-laying vehicles, such as farm tractors, to permit such vehicles to cross or travel upon paved roads without damaging the finished surfaces of such roads.

Roadable grousers which provide the tractive effort normally provided by steel grousers are appreciably softer than their steel grouser counterparts and, thus, wear out much more rapidly. Accordingly, to make the use of roadable grousers economically practical, it is necessary that they be readily and inexpensively replaceable.

US—A—3666327 discloses a roadable grouser (hereinafter referred to as of the kind described), which is capable of being replaceably fastened to a surface of a track shoe having protruding outwardly from the surface at least one head of a fastener for fastening the track shoe to a track link, the grouser comprising an elongate grouser bar of elastomeric material; means for fastening the grouser to the track shoe with one surface of the grouser facing the track shoe surface; and at least one blind recess in the grouser surface to accommodate, in use, a respective fastener head. However this grouser is located on the track shoe by end flanges which wrap around the ends of the shoe and the grouser has to be flexible enough to allow bending upon being fitted by hand. Consequently the grouser has little resistance to heavy wear and a short life.

One method, as disclosed for example in GB—A—1041991, and US—A—1635596, —3058783 and —3475060, of making grousers sturdier is by bonding a suitable mounting plate to the underside of the grouser bar. The mounting plate is also a convenient means for securing the grouser to a track shoe using screw threaded fasteners.

The use of such a mounting plate would be difficult on track shoes which are, themselves, retained by bolts to the links of the track chain. This is because track stability and proper ride characteristics dictate where the grouser is located upon the track shoe. Unfortunately, this location encompasses and area in which the track shoe retaining bolts are likewise located.

Thus, in mounting the grouser to the track shoe, one would have to contend with the problem associated with the head of the track shoe retaining bolts protruding from the outer ground engaging surface of the track shoe. This problem assumes greater importance in connection with another problem which is one of providing the bond between the rubber grouser bar and the mounting plate with sufficient strength to withstand the high stresses it encounters during operation. Such bond failure will result in waste and the premature loss of the rubber grouser bar, causing a loss of traction and possible damage to any finished road surface.

Providing adequate bond strength is difficult to achieve in the first place because of the limited amount of surface area which is available between the grouser bar and the mounting plate. This is because the grouser bar usually extends substantially the entire length of the track shoe for traction purposes, while being sufficiently narrow to provide the tip pressure necessary to obtain full penetration of the grouser into the soil so as to realise the maximum tractive potential of the grouser. In addition, it is desirable that the mounting plate be as thin as possible in order to maximise the amount of the wearable rubber of the grouser. More rubber height also has the effect of reducing the magnitude of the shear stresses experienced at the bond interface between the rubber and the mounting plate. Minimising the thickness of the mounting plate, however, can result in its thickness being less than the height of the head of the track shoe retaining bolt. Thus, any blind recess, provided in the surface of the grouser, to accommodate the protruding bolt head would require an aperture extending right through the mounting plate and into the elastomeric grouser bar.

This will reduce the bond surface area and also introduces additional bond edges. These edges are undesirable because bond separation or failure normally initiates from such edges.

In accordance with the present invention, a roadable grouser of the kind described is characterised in that the grouser bar is bonded to and projects from one face of a rigid mounting plate, the other face of which provides the one grouser surface; and in that the blind recess is defined by an aperture in the mounting plate and means fixedly connected to the mounting plate for closing the aperture and forming a continuous uninterrupted bond interface between the mounting plate and the grouser bar.

This construction, by providing means for closing the opening in the bond interface created by the bolt receiving aperture, replaces the bond surface area eliminated by the aperture so that the bond interface is continuous and uninterrupted across the mounting plate.

In the drawings:

Fig. 1 is a fragmentary side elevational view of a portion of an endless track chain equipped with roadable grousers embodying the present invention;

Fig. 2 is an enlarged fragmentary sectional view taken along line II—II of Fig. 1 illustrating a preferred embodiment of the present invention; and

Fig. 3 is an enlarged fragmentary sectional view of the grouser similar to Fig. 2, but without the other components of a track chain.

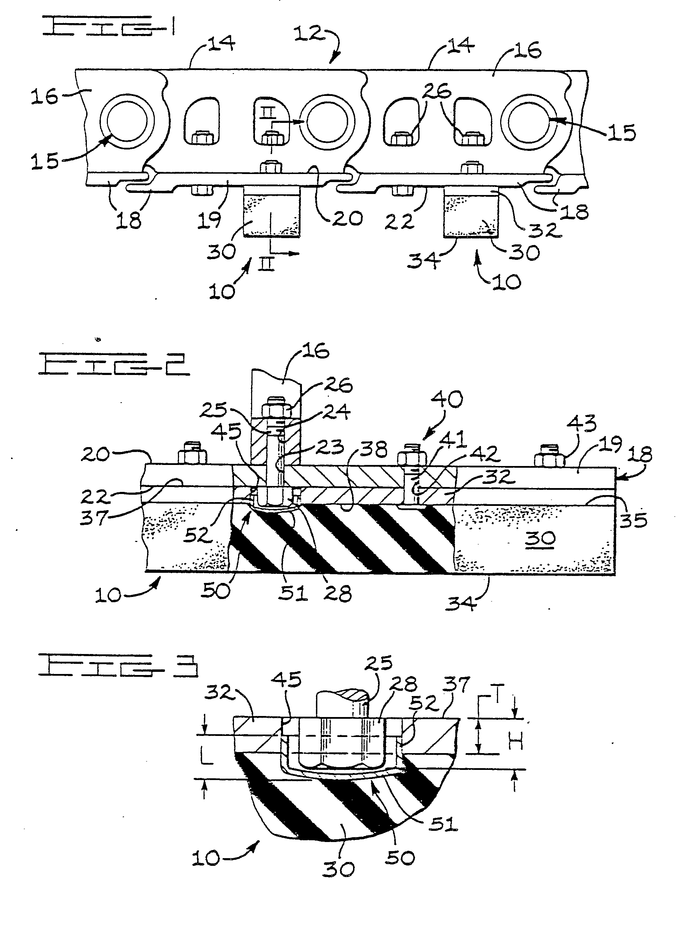

Referring more particularly to the drawings, a roadable grouser embodying the principles of the present invention is generally indicated at 10 in Fig. 1. The grouser 10 is mounted in a manner hereinafter more fully described to an endless track chain, generally indicated at 12, for driving a track-laying vehicle, for example a tracked farm tractor, not shown.

The endless track chain 12 is constructed from a plurality of chain link sections 14. The chain link sections 14 are pivotally interconnected by cooperating pin and bushing assemblies 15. Each chain link section 14 includes a pair of laterally spaced links, one of which is shown at 16, and a track shoe 18. Each track shoe 18 is preferably constructed from a hard, wear resistant material, such as steel, and includes a generally rectangularly shaped flat body 19 having an inner link engaging surface 20 and an opposite outer ground engaging surface 22.

As best shown in Fig. 2, the shoes 18 and links 16 are provided with mating apertures, one of each of which is shown at 23 and 24, respectively. A suitable threaded fastener or bolt 25 is disposed through the mating apertures 23 and 24, which bolt has a nut 26 screw threadably mounted thereon for detachably securing the track shoe 18 to its respective pair of links 16. The bolts 25 have track shoe abutting heads 28 which protrude outwardly from the ground engaging surface 22 of the track shoe 18.

The roadable grouser 10 of the present invention includes an elongated upright grouser bar 30 and a mounting plate 32. The grouser bar 30 is of an elastomeric material, such as rubber. The grouser bar 30 includes an outer ground engaging tip surface 34 and an opposite inner bonding surface 35.

The mounting plate 32 is of a rigid material, preferably a plain carbon steel, and has a generally flat, rectangularly shaped configuration having an outer track shoe mounting surface 37 and an opposite bond surface 38.

The grouser 10 also includes means 40 for replaceably fastening the grouser to the track shoe. Such fastening means preferably includes a plurality of threaded studs 41 connected to the mounting plate 32 and extend outwardly from the outer mounting surface 37. Each stud 41 is preferably received through a mating aperture 42 in the track shoe 18 and has a nut 43 threadably mounted thereon for detachably securing the grouser to the track shoe.

. As best shown in Fig. 3, the mounting plate 32 is also provided with an aperture 45. Such aperture is suitably sized to receive the head 28 of the track shoe mounting fastener or bolt 25. The aperture 45 is provided to permit the locating of the grouser 10 on the track shoe 18 in an area providing the proper ride and track stability characteristics, which area likewise encompasses the protruding bolt heads 28 of the track shoe mounting bolts 25.

The grouser 10 of the present invention includes means for closing the aperture 45 between the inner bond surface 35 of the grouser bar 30 and the inner bond surface 38 of the mounting plate 32 for purposes hereinafter more fully described. Such closing means preferably includes a plug 50. The plug 50 preferably has a cup-shaped configuration including a generally circular base portion 51 and an upright annular lip portion 52 which is connected about the periphery of the base portion 51. The lip portion 52 is constructed so as to be press fitted into the aperture 45 for securing the plug 50 to the mounting plate 32.

Industrial Applicability

The roadable grouser 10 of the present invention has general applications on a track-laying vehicle and more particularly on a tracked farm tractor which normally operates in undeveloped soil, such as farm fields, but which must also travel upon finished road surfaces in order to get to such fields. To accomplish this, the grouser 10 is provided with a grouser bar 30 of elastomeric material which provides traction in the soil, but will not damage finished road surfaces when the tractor is operated thereon. By way of example, a grouser bar 30 of a natural rubber of the type used in tire treads with a 68 durometer A hardness has been tested with satisfactory results.

The grouser bar 30 is provided with a mounting plate 32 for replaceably detaching the grouser 10 to the track shoe 18 as the rubber grouser bar 30 is subject to a higher wear rate than the other components of the track chain upon which the grouser is used. The mounting bar 32 is bonded by any suitable bonding process known in the art to the inner bond surface 35 of the bar 30. However, before this bonding occurs, the plug 50 is secured in place by press fitting the lip portion 52 thereof into the aperture 45. The lip portion is provided with a sufficient length $L$ to permit the positioning of the circular base portion 51 of the plug 50 outwardly of the inner bond surface 38 of the mounting plate 32. Thus, the mounting plate 32 may have a thickness $T$ which is equal to or less than the height $H$ of the bolt head 28. Accordingly, the thickness of the mounting plate can be kept to a minimum without limitation by the bolt head height. This enables a greater proportion of the grouser height to be of rubber in order to provide greater wear life and to reduce the stresses at the bond interface.

With the plug 50 thus in place, the mounting plate 32 is preferably bonded to the rubber grouser bar 30 during the molding process of the bar. This permits the rubber to closely conform to the shape of the plug 50. Thus, a continuous, uninterrupted bond interface is provided between the inner bonding surface 35 of the grouser bar 30 and the inner bond surface 38 of the mounting bar 32.

In addition, the plug is of a size and orientation sufficient to position its base portion 51 within a predetermined close distance from the top of the bolt head 28. Such close distance relationship is advantageous in that the plug 50 will be supported by the head 28 to prevent any undue slippage of the plug caused by excessive loads on the grouser 10. If such slippage were allowed to occur, a bond failure about the plug 50 may result.

**Claims**

1. A roadable grouser (10), which is capable of being replaceably fastened to a surface (22) of a track shoe (18) having protruding outwardly from the surface at least one head (28) of a fastener (25) for fastening the track shoe to a track link (16), the grouser comprising an elongate grouser bar (30) of elastomeric material; means (40) for fastening the grouser to the track shoe with one surface (37) of the grouser facing the track shoe surface (22); and at least one blind recess (45, 50) in the surface (37) to accommodate, in use, a respective fastener head (28); characterised in that the grouser bar (30) is bonded to and projects from one face (38) of a rigid mounting plate (32), the other face of which provides the one grouser surface (37); and in that the blind recess is defined by an aperture (45) in the mounting plate (32) and means (50) fixedly connected to the mounting plate (32) for closing the aperture (45) and forming a continuous uninterrupted bond interface between the mounting plate (32) and the grouser bar (30).

2. A grouser according to claim 1, wherein the means (50) is a plug.

3. A grouser according to claim 2, wherein the plug (50) is press fitted into the aperture (45).

4. A grouser according to claim 2 or claim 3, wherein the plug (50) is generally of a cup configuration and includes a circular base portion (51) and a cylindrical annular lip portion (52) extending from the periphery of the base portion (51).

5. A grouser according to claims 3 and 4, wherein the lip portion (52) of the plug (50) is press fitted into the aperture (45) with the base portion (51) being disposed adjacent to the face (38) of the mounting plate (32).

6. A grouser according to any one of the preceding claims, wherein the fastening means (40) includes a plurality of screw threaded studs (41) connected to the mounting plate (32) and being positionable, in use, through mating openings (42) in the track shoe (18).

7. A grouser according to any one of the preceding claims, wherein the elastomeric material of the grouser bar (30) is rubber.

8. An endless track chain (12) for a track-laying vehicle, the chain comprising a track link (16); a rigid track shoe (18) with an outer ground engaging surface (22) having protruding outwardly therefrom at least one head (28) of a fastener (25) which fastens the track shoe to the track link; and a grouser according to any one of the preceding claims fastened to the track shoe with the head (28) received in the aperture (45).

9. A chain according to claim 8, when dependent at least on claim 4, wherein the mounting plate (32) has a thickness ($T$) in the range equal to or less than the height ($H$) by which the fastener head (28) protrudes and the lip portion (52) has a length ($L$) sufficient for positioning the base portion (51) of the plug outwardly of the face (38) of the mounting plate.

10. A chain according to claim 8 when dependent at least on claim 4 to claim 9, wherein the base portion (51) of the plug (50) is positioned close to the fastener head (28) whereby the plug will be supported by the fastener head when excessive loads on the grouser tend to force the plug into the aperture.

**Patentansprüche**

1. Für Straßen geeignete Kettengliedauflage (10), die in lösbarer Weise an einer Oberfläche (22) eines Kettenschuhs (18) befestigbar ist, mit mindestens einem Kopf (28) einer Befestigungsvorrichtung (25) nach außen von der Oberfläche vorspringend zur Befestigung des Kettenschuhs mit einem Kettenglied (16), wobei die Kettenauflage folgendes aufweist: eine langgestreckte Kettenauflagestange (30) aus Elastomermaterial, Mittel (40) zur Befestigung der Kettenauflage am Kettenschuh mit einer Oberfläche (37) der Kettenauflage zur Kettenschuhoberfläche (22) hinweisend, und mindestens eine Sackausnehmung (45, 50) in der Oberfläche (37) zur Unterbringung eines entsprechenden Befestigungskopfes (28) im Gebrauch, dadurch gekennzeichnet, daß die Kettengliedauflagestange (30) mit einer Stirnfläche (38) einer starren Befestigungsplatte (32) verbunden ist und von dieser wegragt, wobei die andere Stirnfläche die eine Kettengliedauflageoberfläche (37) bildet, und ferner gekennzeichnet dadurch, daß die Sackausnehmung durch eine Öffnung (45) in der Befestigungsplatte (32) definiert ist und durch Mittel (50) fest verbunden mit der Befestigungsplatte (32) zum Verschließen der Öffnung (45) und zur Bildung einer kontinuierlichen, nicht unterbrochenen Verbindungszwischenfläche zwischen der Befestigungsplatte (32) und der Kettengliedauflagestange (30).

2. Kettengliedauflage nach Anspruch 1, wobei die Mittel (50) ein Stopfen sind.

3. Kettengliedauflage nach Anspruch 2, wobei der Stopfen (50) in die Öffnung (45) durch Pressen eingepaßt ist.

4. Kettengliedauflage nach Anspruch 2 oder 3, wobei der Stopfen (50) im ganzen eine napfförmige Gestalt besitzt und einen kreisförmigen Basisteil (51) aufweist sowie einen zylindrischen Ringlippenteil (52), der sich vom Umfang des Basisteils (51) aus erstreckt.

5. Kettengliedauflage nach Anspruch 3 oder 4, wobei der Lippenteil (52) des Stopfens (50) in die Öffnung (45) durch Pressen eingepaßt ist, wobei der Basisteil (51) benachbart zu der Stirnfläche (38) der Befestigungsplatte (32) angeordnet ist.

6. Kettengliedauflage nach einem der vorhergehenden Ansprüche, wobei die Befestigungsmittel (40) eine Vielzahl von Schraubstiften (41) aufweisen, verbunden mit der Befestigungsplatte (32) und positionierbar im Gebrauch durch Zusammenpassung der Öffnungen (42) des Kettenschuhs (18).

7. Kettengliedauflage nach einem der vorhergehenden Ansprüche, wobei das Elastomermaterial der Kettengliedauflagestange (30) Gummi ist.

8. Endlose Gleiskette (12) für ein Gleiskettenfahrzeug, wobei die Gleiskette folgendes aufweist: ein Kettenglied (16), einen starren Kettenschuh (18) mit einer äußeren Erdeingriffsoberfläche (22) mit mindestens einem Kopf (28) einer Befestigungsvorrichtung (25), die von der Oberfläche aus nach außen vorsteht, und wobei die Befestigungsvorrichtung zur Befestigung des Kettenschuhs an dem Kettengelenk dient, und eine Kettenauflage nach einem oder mehreren der vorhergehenden Ansprüche befestigt am Kettenschuh, wobei der Kopf (28) in der Öffnung (45) aufgenommen ist.

9. Kette nach Anspruch 8 bei Abhängigkeit mindestens von Anspruch 4, wobei die Befestigungsplatte (32) eine Dicke (T) im Bereich gleich oder weniger als der Höhe (H) aufweist, mit der der Befestigungskopf (28) vorsteht und wobei der Lippenteil (52) eine Länge (L) aufweist, die ausreicht, um den Basisteil (51) des Stopfens nach außen gegenüber der Stirnfläche (38) der Befestigungsplatte zu positionieren.

10. Kette nach Anspruch 8 bei Abhängigkeit von mindestens Anspruch 4 bis 9, wobei der Basisteil (51) des Stopfens (50) nahe zu dem Befestigungskopf (28) positioniert ist, wodurch der Stopfen durch den Befestigungsvorrichtungskopf getragen ist, wenn übermäßige Belastungen an der Kettenauflage die Tendenz haben, den Stopfen in die Öffnung zu drücken.

**Revendications**

1. Crampon utilisable sur route (10) apte à être fixé de manière remplaçable à une surface (22) d'un patin de chemin de roulement (18) comportant au moins une tête (28) d'un organe de fixation (25) destiné à fixer le patin de chemin de roulement à un maillon (16), cette tête faisant saillie vers l'extérieur depuis la surface, le crampon comprenant une barre allongée (30) en élastomère; des moyens (40) pour fixer le crampon au patin de chemin de roulement, une surface (37) du crampon faisant face à la surface (22) du patin de chemin de roulement; et au moins un évidement borgne (45, 50) ménagé dans la surface (37) pour recevoir, en utilisation, une tête (28) d'organe de fixation respective; caractérisé en ce que la barre du crampon (30) est relié à et fait saillie sur une face (38) d'une plaque de montage rigide (32) dont l'autre face constitue la surface (37) du crampon; et en ce que l'évidement borgne est défini par une ouverture (45) ménagée dans la plaque de montage (32) et un moyen (50) reliés de manière fixe au socle (32) afin de fermer l'ouverture (45) et formant une interface dejonction continue et ininterrompue entre la plaque de montage (32) et la barre (30) du crampon.

2. Crampon selon la revendication 1, dans lequel les moyens (50) sont un bouchon.

3. Crampon selon la revendication 2, dans lequel le bouchon (50) est inséré à la presse dans l'ouverture (45).

4. Crampon selon la revendication 2 ou 3 dans lequel le bouchon (50) a d'une manière générale la forme d'une coupelle et comporte une partie de base circulaire (51) et une partie cylindrique annulaire formant lèvre (52) s'étendant depuis la périphérie de la partie de base (51).

5. Crampon selon la revendication 3 et 4, dans lequel la partie formant lèvre (52) du bouchon (50) est inséré à la presse dans l'ouverture (45), la partie de base étant adjacente à la face (38) de la plaque de montage (32).

6. Crampon selon l'une quelconque des revendications précédentes dans lequel les moyens de fixation (40) comportent une série de goujons filetés (41) reliés à la plaque de montage (32) et susceptibles d'être positionnés en utilisation, par l'intermédiaire d'ouvertures complémentaires (42) dans le patin de chemin de roulement (18).

7. Crampon selon l'une quelconque des revendications précédentes, dans lequel le matériau en élastomère de la barre (30) du crampon est du caoutchouc.

8. Chaîne sans fin de chemin de roulement (12) pour un véhicule à chemins de roulement, cette chaîne comprenant un maillon (16); un patin de chemin de roulement rigide (18) pourvu d'une surface externe de contact avec le sol (22), au moins une tête (28) d'un organe de fixation (25) fixant le patin de chemin de roulement au maillon et faisant saillie vers l'extérieur depuis cette surface; et un crampon selon l'une quelconque des revendications précédentes fixé au patin de chemin de roulement, la tête (28) étant logée dans l'ouverture (45).

9. Chaîne selon la revendication 8, quand elle dépend au moins de la revendication 4, dans laquelle la plaque de montage (32) a une épaisseur (T) égale ou inférieure à la hauteur (H) de laquelle la tête (28) de l'organe de fixation fait saillie, et la partie formant lèvre (52) a une longueur (L) suffisante pour positionner la partie de base (51) du bouchon vers l'extérieur de la face (38) de la plaque de montage.

10. Chaîne selon la revendication 8, lorsqu'elle dépend au moins des revendications 4 à 9, dans laquelle la partie de base (51) du bouchon (50) est située à proximité immédiate de la tête de l'organe de fixation, le bouchon étant supporté par la tête de l'organe de fixation lorsque des charges excessives s'exerçant sur le crampon tendent à faire entrer en force le bouchon dans l'ouverture.

FIG-1

FIG-2

FIG-3